# EUROPÄISCHE PATENTSCHRIFT

(11) **EP 2 908 409 B1**
(45) Veröffentlichungstag und Bekanntmachung des Hinweises auf die Patenterteilung: **14.09.2016**
(21) Anmeldenummer: 14154904.8
(22) Anmeldetag: 12.02.2014
(51) Int. Cl.: H02K 5/128, H02K 11/30, H02K 5/08

(54) **Kraftfahrzeug-Nebenaggregat-Elektromotor**
Motor vehicle auxiliary electric motor
Moteur électrique de groupe auxiliaire de véhicule automobile

(43) Veröffentlichungstag der Anmeldung: 19.08.2015
(73) Patentinhaber: Pierburg Pump Technology GmbH, 41460 Neuss (DE)
(72) Erfinder: Hänsch, Wolfgang, 39120 Magdeburg (DE); Waberski, Maik, 16845 Neustadt (DE); Weinert, Michael, 04703 LEISNIG (DE); Hartzendorf, Jörg, 09241 Mühlau (DE); Rathke, Ronald, 04720 Döbeln (DE); Wienecke, Thomas, 47877 Willich (DE)
(74) Vertreter: Patentanwälte ter Smitten Eberlein Rütten Partnerschaftsgesellschaft

(56) Entgegenhaltungen:
- EP-A1- 1 921 020
- EP-A1- 2 012 572
- DE-A1- 4 444 643
- DE-A1- 19 727 164
- US-A1- 2006 053 577

## Beschreibung

Die Erfindung bezieht sich auf einen Kraftfahrzeug-Nebenaggregat-Elektromotor als Antriebsmotor eines Nebenaggregats in einem Kraftfahrzeug.

Derartige Nebenaggregate können beispielsweise Wasserpumpen, Wasser-Umwälzpumpen, Vakuumpumpen, Druckluftpumpen, Schmiermittelpumpen, Klima-Kompressoren oder auch Steiler für Scheinwerfer, Schließanlagen, Drosselklappen et cetera sein. Wegen seiner Verschleißfreiheit und der hermetischen Trennbarkeit von Motorrotor und Motorstator werden als Nebenaggregat-Elektromotoren bevorzugt so genannte Spalttopfmotoren eingesetzt, die prinzipbedingt eine elektronische Kommutierung aufweisen, also als so genannte bürstenlose Elektromotoren ausgebildet sind. Für die Kommutierung der Statorspulen weist der Elektromotor eine Steuerungselektronik auf, die, bezogen auf den Spalttopf, auf der abgeschlossenen Seite in einem Elektronikraum angeordnet ist.

Typische Kraftfahrzeug-Nebenaggregat-Elektromotoren sind bekannt aus DE 19727164 A1 und US 2006/0053577 A1.

Aus DE 196 46 617 A1 ist eine elektrische Kühlmittelpumpe bekannt, bei der der Elektronikraum in einem separaten Gehäuse angeordnet ist. Zwar ist die Steuerungselektronik gut geschützt gegenüber dem Nassbereich, in dem der Motorrotor angeordnet ist, jedoch kann Feuchtigkeit auch aus der Pumpenumgebung in den Elektronikraum eindringen, und die Steuerungselektronik beeinflussen bzw. beschädigen. Da in dem Elektronikraum Luft eingeschlossen ist, muss zum Druckausgleich ein entsprechendes Druckausgleichselement vorgesehen sein, durch das auch Feuchtigkeit eindringen kann.

Aus DE 10 2006 033 175 A1 ist eine Steuerungselektronik zur Ansteuerung eines Elektromotors bekannt, die vollständig in einer Vergussmasse vergossen ist, wodurch die Steuerungselektronik flüssigkeitsdicht abgeschlossen ist gegen Eindringen von Feuchtigkeit. Bevor die Steuerungselektronik in ein Motorgehäuse eingebaut wird, ist diese also bereits in einer Vergussmasse vergossen. Hierzu muss die Steuerungselektronik zunächst in ein Gussgehäuse eingelegt werden, das anschließend mit Vergussmasse gefüllt wird. Nach dem Aushärten der Vergussmasse muss das Gussgehäuse entfernt werden.

Aufgabe der Erfindung vor diesem Hintergrund ist es, einen elektronisch kommutierten Kraftfahrzeug-Nebenaggregat-Elektromotor zu schaffen, der einfach herzustellen ist und einen guten Feuchtigkeitsschutz für die Steuerungselektronik aufweist.

Diese Aufgabe wird erfindungsgemäß gelöst mit einem Kraftfahrzeug-Nebenaggregat-Elektromotor mit den Merkmalen des Anspruchs 1.

Der erfindungsgemäße Kraftfahrzeug-Nebenaggregat-Elektromotor weist einen elektronisch kommutierten Motorstator auf, der von mehreren Statorspulen gebildet wird. Die Statorspulen werden von einer Steuerungselektronik angesteuert, die im Wesentlichen aus einer Steuerungslogik und einem Leistungsteil besteht. Die Steuerungselektronik ist in einem abgeschlossenen Elektronikraum angeordnet, der auf der trockenen Seite des Elektromotors angeordnet ist. Die trockene Seite kann beispielsweise durch einen Spalttopf von der nassen Seite des Elektromotors flüssigkeitsdicht abgetrennt sein.

Die Steuerungselektronik ist in einem Vergusskörper vollständig eingegossen, so dass sie geschützt vor Nässe und Feuchtigkeit ist. Der Elektronikraum kann, muss jedoch nicht, weitere elektrische Bauteile aufweisen. Beispielsweise können auch die Statorspulen in dem Elektronikraum angeordnet sein. In jedem Fall füllt der Vergusskörper nicht den gesamten Elektronikraum aus, sondern ein Teil des Elektronikraums ist mit Luft gefüllt. Dieser mit Luft gefüllte Teil des Elektronikraums ist der Gasraum. Der Gasraum ist über einen Lüftungsschacht mit der den Elektromotor außenseitig umgebenden Atmosphäre fluidisch verbunden. Der Lüftungsschacht durchdringt den Vergusskörper, wobei in dem Lüftungsschacht ein Druckausgleichelement vorhanden ist, das gasdurchlässig ist, jedoch weitgehend undurchlässig für Flüssigkeiten, z.B. Wasser, ist.

Der Lüftungsschacht durchdringt den Vergusskörper nach Art eines Schnorchels, wobei der Elektromotor während des Füllens des Elektronikraums mit flüssiger Vergussmasse derart aufgestellt ist, dass die motoraußenseitige Öffnung des Lüftungsschachtes höhenmäßig unterhalb der innenseitigem Öffnung des Lüftungsschachtes liegt, die zum Elektronikraum hin öffnet. Der Lüftungsschacht schafft also eine fluidische Verbindung von der Motoraußenseite zum Gasraum des Elektronikraums, wobei der Lüftungsschacht durch den Vergusskörper hindurchragt.

Das Auffüllen des Elektronikraums mit flüssiger Vergussmasse wird gestoppt, bevor der Vergussmasse-Pegel die innenseitige Öffnung des Lüftungsschachtes erreicht. Es wird nur so viel Vergussmasse in den Elektronikraum eingefüllt, wie zum feuchtigkeitsdichten Versiegeln der Steuerungselektronik erforderlich ist. Auf diese Weise wird nur die unbedingt erforderliche Menge an Vergussmasse verbraucht. Durch den Lüftungsschacht bzw. das darin angeordnete Druckausgleichselement ist der Druckausgleich zwischen dem Gasraum und der umgebenden Atmosphäre stets sichergestellt.

Das Druckausgleichselement kann beispielsweise von zwei in Gegenrichtung zueinander angeordneten Rückschlagventilen gebildet werden. Besonders bevorzugt wird das Druckausgleichselement jedoch von einer gasdurchlässigen Druckausgleichsmembran gebildet, die zwar gasdurchlässig ist, jedoch weitgehend flüssigkeits- bzw. wasserdicht ist.

Gemäß einer bevorzugten Ausführungsform ist der Elektronikraum durch einen separaten Gehäusedeckel verschlossen, an dem der Lüftungsschacht befestigt ist. Besonders bevorzugt ragt der Lüftungsschacht ungefähr senkrecht von der Grundebene des Gehäusedeckels in den Elektronikraum hinein, so dass er während des Befüllens mit Vergussmasse vertikal steht.

Besonders bevorzugt liegt die Grenzebene zwischen dem Vergusskörper und dem Gasraum höhenmäßig zwischen der gasraumseitigen Öffnungsebene des Lüftungsschachtes und der Grundebene des Gehäusedeckels. Die Grundebene des Gehäusedeckels ist bevorzugt parallel zu der Grenzebene zwischen dem Vergusskörper und dem Gasraum. Die Grenzebene sollte mindestens einen bis mehrere Millimeter beabstandet von der Öffnungsebene sein, wobei auch die Öffnungsebene bevorzugt ungefähr parallel zu der Grenzebene liegt.

Als Öffnung zum Füllen des Elektronikraums mit der flüssigen Vergussmasse kann grundsätzlich der Lüftungsschacht benutzt werden. Besonders bevorzugt ist jedoch vorgesehen, dass an dem Motorgehäuse des Elektromotors eine separate Füllöffnung vorgesehen ist, die fluidisch mit dem Elektronikraum verbunden ist. Die Füllöffnung liegt bevorzugt in einer Ebene beabstandet bzw. oberhalb zu der Grenzebene. Die Füllöffnung ist bevorzugt durch einen separaten Öffnungsverschluss verschlossen, der nach dem Einfüllen der Vergussmasse in den Elektronikraum in der Füllöffnung appliziert wird.

Die Statorspulen sind in einem Statorraum angeordnet, der bevorzugt einen Teil des Gasraums ausfüllt. Die Statorspulen und die Steuerungselektronik sind also in einem einzigen Elektronikraum angeordnet. Das Volumen des Gasraums ist bevorzugt größer als das Volumen des Vergusskörpers bzw. der Vergussmasse.

Gemäß eines nebengeordneten Verfahrens zur Herstellung des Vergusskörpers in einem Kraftfahrzeug-Nebenaggregat-Elektromotor, der die Merkmale einer der Vorrichtungs- Ansprüche aufweist, sind die folgenden Verfahrensschritte vorgesehen:
Einfüllen der flüssigen Vergussmasse in den Elektronikraum,
Stoppen des Einfüllens, sobald die Steuerungselektronik vollständig vergossen ist und bevor die Vergussmasse die Öffnungsebene des Lüftungsschachtes erreicht hat, und
Verschließen der Füllöffnung mit einem Öffnungsverschluss.

Die Vergussmasse wird durch die Füllöffnung von oben in den Elektronikraum eingefüllt, bis die Steuerungselektronik vollständig vergossen ist. Sobald die Steuerungselektronik vollständig von Vergussmasse umgeben ist, wird das Einfüllen der Vergussmasse gestoppt. Schließlich wird die Füllöffnung, durch die die Vergussmasse in den Elektronikraum eingefüllt wurde, verschlossen. Hierdurch wird auf einfache Weise die Möglichkeit geschaffen, die Steuerungselektronik im bereits eingebauten Zustand flüssigkeitsdicht zu vergießen. Da nur die Steuerungselektronik vergossen wird, ist der Verbrauch an Vergussmasse relativ gering. Der hierbei nicht zu vermeidende Gasraum wird über den Lüftungsschacht und das Druckausgleichelement darin belüftet, so dass zwischen dem Gasraum und der umgebenden Atmosphäre kein Druckgefälle entstehen kann.

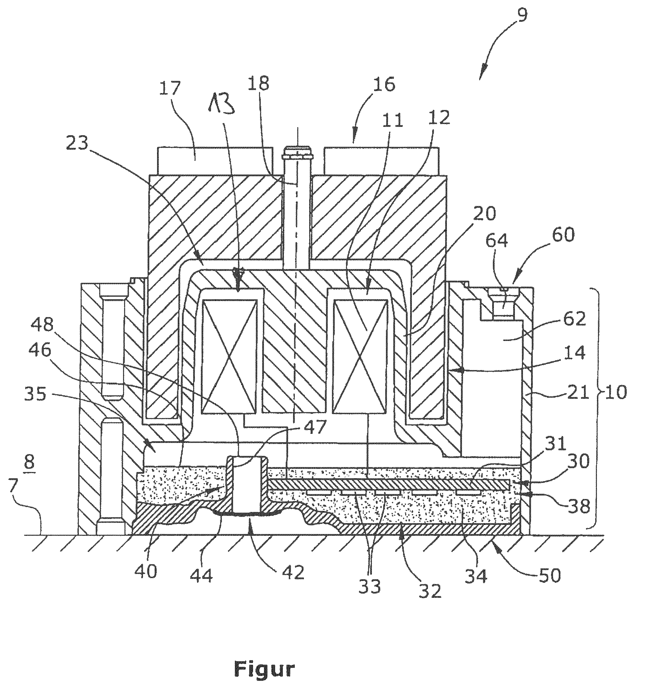

Im Folgenden wird ein Ausführungsbeispiel der Erfindung anhand der Zeichnung näher erläutert.

Die Figur zeigt im Längsschnitt eine Kraftfahrzeug-Kühlmittelpumpe mit einem elektronisch kommutierten Elektromotor, der einen Pumpenrotor antreibt.

In der Figur ist ein Kraftfahrzeug-Nebenaggregat 9 dargestellt, das im vorliegenden Fall als eine elektrische Wasserpumpe ausgebildet ist. Das Nebenaggregat 9 wird durch einen Elektromotor 10 angetrieben, der elektronisch kommutiert wird. Der Elektromotor 10 ist vorliegend als sogenannter Außenläufer ausgebildet und weist einen topfförmigen Motorrotor 14 auf, der um einen zentralen koaxialen Motorstator 12 herum angeordnet ist, der von mehreren Statorspulen 11 gebildet wird. Der Motorrotor 14 ist einstückig verbunden mit einem Pumpenrotor 16, der mehrere Rotorflügel 17 aufweist. Der Motorrotor 14 und der Motorstator 12 sind koaxial zu einer Längsachse 18 angeordnet und bilden zusammen den einstückigen Rotor.

Das Nebenaggregat 9 steht mit seiner Längsachse 18 senkrecht auf einer Horizontalebene 7, wobei der Motorrotor 14 oben angeordnet ist. In dieser Position des Nebenaggregats 9 wird die Vergussmasse eingefüllt, was weiter unten beschrieben ist.

Der Motorstator 12 und der Motorrotor 14 sind durch ein Spaltrohr 20 flüssigkeitsdicht voneinander getrennt. Das Spaltrohr 20 ist Teil eines Spalttopfes 23, der die nasse Seite des Nebenaggregats 9 flüssigkeitsdicht trennt von der trockenen Seite. Der Spalttopf 23 hält eine Rotorachse 18, auf der der Rotor mit einem Gleitlager gelagert ist.

Das Nebenaggregat 9 weist ein Gehäuse 21 auf, das zusammen mit dem Spalttopf 23 und einem Gehäusedeckel 50 die trockene Seite einschließt, die einen Elektronikraum 38, einen Gasraum 35 und die Statorspulen 11 beinhaltet. Der Elektronikraum 30 ist, in Bezug auf die Statorspulen 11, an der rotorabgewandten Seite des Nebenaggregats 9 angeordnet. Die untere distale Seite des Elektronikraums 38 ist durch den Gehäusedeckel 50 verschlossen.

In dem Elektronikraum 38 ist eine Steuerungselektronik 30 angeordnet, die im Wesentlichen von einer Platine 31 gebildet wird, auf der elektronische Bauelemente 33 angeordnet und durch Leiterbahnen miteinander verbunden sind. Die elektronischen Bauelemente 33 sind zum Einen Leistungshalbleiter, durch die die Statorspulen 11 angesteuert werden, und zum Anderen analoge und digitale elektronische Bauteile, durch die die Leistungshalbleiter angesteuert werden. Die Grundebene des Gehäusedeckels 50 und die Grundebene der Platine 31 liegen in der in der Figur dargestellten räumlichen Orientierung des Nebenaggregats 9 beide im wesentlichen parallel zueinander in einer horizontalen Querebene des Nebenaggregats 9.

Die Steuerungselektronik 30 ist in einen Vergusskörper 32 eingegossen, der aus einer ausgehärteten Vergussmasse 34 besteht. Die obere Vergusskörper- Grenzebene 46 zwischen dem Vergusskörper 32 und dem Gasraum 35 darüber liegt in einer Horizontalebene, also in einer Querebene des Nebenaggregats 9.

Der Gehäusedeckel 50 weist einen nicht-zentrisch angeordneten Lüftungsschacht 40 auf, der eine vertikale Ausrichtung hat, also eine zu der Längsachse 18 parallele Ausrichtung hat. Der Lüftungsschacht 40 ist rohrartig ausgebildet und weist eine gasraumseitige Öffnung 47 auf, deren Öffnungsebene 48 ebenfalls in einer Querebene des Nebenaggregats 9 liegt. Die Öffnungsebene 48 liegt wenige Millimeter oberhalb der Grenzebene 46.

Dem Lüftungsschacht 40 ist ein Druckausgleichselement 42 zugeordnet, das vorliegend als gasdurchlässige Druckausgleichmembran 44 ausgebildet ist. Das Druckausgleichselement 42 ist vorliegend an der außenseitigen Öffnung angeordnet, kann jedoch auch innerhalb des Lüftungsschachtes 40 angeordnet sein. Die Druckausgleichmembran 44 kann beispielsweise einen textile PTFE-Membran sein. Über den Lüftungsschacht und das Druckausgleichselement 42 ist die das Nebenaggregats 9 umgebende Atmosphäre 8 pneumatisch verbunden mit dem Gasraum 35 innerhalb des Elektronikraums 38. Hierdurch wird sichergestellt, dass zwischen dem Gasraum 35 und der das Nebenaggregat 9 umgebenden Atmosphäre kein Druckgefälle entstehen kann.

An einer Stelle des Umfangs des Nebenaggregats ist eine separate Füllöffnung 60 vorgesehen, die über einen vertikalen Füllkanal 62 mit dem Elektronikraum 38 fluidisch verbunden ist. Durch die Füllöffnung 60 wird die flüssige Vergussmasse eingefüllt. Das Einfüllen der Vergussmasse wird gestoppt, sobald die Steuerungselektronik 30 vollständig von Füllmasse eingeschlossen ist und bevor die Grenzfläche 46 der Vergussmasse 34 die Öffnungsebene 48 des Lüftungsschachtes 40 erreicht hat. Anschließend wird die Füllöffnung 60 mit einem Öffnungsverschluss 64 verschlossen.

## Patentansprüche

1. Kraftfahrzeug-Nebenaggregat-Elektromotor (10) mit einem elektronisch kommutierten Motorstator (12) und einer Steuerungselektronik (30) zum Ansteuern der den Motorstator (12) bildenden Statorspulen (11),
einem abgeschlossenen Elektronikraum (38), in dem die Steuerungselektronik (30) angeordnet ist,
einem Vergusskörper (32) in dem Elektronikraum (38), wobei die Steuerungselektronik (30) in dem Vergusskörper (32) vergossen ist,
einem an den Vergusskörper (32) angrenzenden Gasraum (35), und einem Druckausgleichselement (42) zum Be- und Entlüften des Gasraums (35),
wobei ein Lüftungsschacht (40) vorgesehen ist, der den Gasraum (35) mit der Atmosphäre (8) fluidisch verbindet, den Vergusskörper (32) durchdringt und dem das Druckausgleichselement (42) fluidisch zugeordnet ist.

2. Kraftfahrzeug-Nebenaggregat-Elektromotor (10) nach Anspruch 1, wobei der Elektronikraum (38) durch einen Gehäusedeckel (50) verschlossen ist, an dem der Lüftungsschacht (40) befestigt ist.

3. Kraftfahrzeug-Nebenaggregat-Elektromotor (10) nach einem der vorangegangenen Ansprüche, wobei der Lüftungsschacht (40) ungefähr senkrecht von der Grundebene des Gehäusedeckels (50) in den Elektronikraum (38) hineinragt.

4. Kraftfahrzeug-Nebenaggregat-Elektromotor (10) nach einem der vorangegangenen Ansprüche, wobei die Grenzebene (46) zwischen dem Vergusskörper (32) und dem Gasraum (35) zwischen der gasraumseitigen Öffnungsebene (48) des Lüftungsschachtes (40) und der Grundebene des Gehäusedeckels (50) liegt.

5. Kraftfahrzeug-Nebenaggregat-Elektromotor (10) nach einem der vorangegangenen Ansprüche, wobei ein Motorgehäuse (21) vorgesehen ist, das eine separate Füllöffnung (60) aufweist, die fluidisch mit dem Elektronikraum (38) verbunden und durch einen Öffnungsverschluss (64) verschlossen ist.

6. Kraftfahrzeug-Nebenaggregat-Elektromotor (10) nach einem der vorangegangenen Ansprüche, wobei die Statorspulen (11) in einem Statorraum angeordnet sind, der einen Teil des Gasraums (35) bildet.

7. Kraftfahrzeug-Nebenaggregat-Elektromotor (10) nach einem der vorangegangenen Ansprüche, wobei das Druckausgleichselement (42) durch eine gasdurchlässige Druckausgleichsmembran (44) gebildet wird.

8. Kraftfahrzeug-Nebenaggregat-Elektromotor (10) nach einem der vorangegangenen Ansprüche, wobei der Motorstator (12) durch ein Spaltrohr (20) von dem Motorrotor (14) fluidisch getrennt ist.

9. Verfahren zur Herstellung eines Vergusskörpers (32) in einem Kraftfahrzeug-Nebenaggregat-Elektromotor (10) nach einem der vorangegangenen Ansprüche, mit den Verfahrensschritten:
Einfüllen einer flüssigen Vergussmasse (34) durch die Füllöffnung (60) in den Elektronikraum,
Stoppen des Einfüllens, sobald die Steuerungselektronik (30) vollständig vergossen ist und bevor die Vergussmasse die Öffnungsebene (48) des Lüftungsschachtes (40) erreicht hat, und
Verschließen der Füllöffnung (60) mit einem Öffnungsverschluss (64).

## Claims

1. Motor vehicle auxiliary electric motor (10) comprising
an electronically commutated motor stator (12) and control electronics (30) for driving the stator coils (11) forming the motor stator (12),
a closed electronics chamber (38) in which the control electronics (30) is arranged,
a molded body (32) in the electronics chamber (38), wherein the control electronics (30) is molded in the molded body (32),
a gas chamber (35) adjoining the molded body (32), and
a pressure equalization element (42) for aerating and venting the gas chamber (35),
wherein a ventilation shaft (40) is provided that fluidically connects the gas chamber (35) with atmosphere (8), passes through the molded body (32) and to which pressure equalization element (42) is fluidically assigned.

2. Motor vehicle auxiliary electric motor (10) of claim 1, wherein the electronics chamber (38) is closed by a housing cover (50) to which the ventilation shaft (40) is fastened.

3. Motor vehicle auxiliary electric motor (10) of one of the preceding claims, wherein the ventilation shaft (40) projects approximately vertically from
the base plane of the housing cover (50) into the electronics chamber (38).

4. Motor vehicle auxiliary electric motor (10) of one of the preceding claims, wherein the boundary plane (46) between the molded body (32) and the gas chamber (35) is situated between the opening plane (48) of the ventilation shaft (40) on the side of the gas chamber and the base plane of the housing cover (50).

5. Motor vehicle auxiliary electric motor (10) of one of the preceding claims, wherein a motor housing (21) is provided which has a separate f9illing opening (80) in fluid communication with the electronics chamber (38) and closed with an opening closure (64).

6. Motor vehicle auxiliary electric motor (10) of one of the preceding claims, wherein the stator coils (11) are arranged in a stator chamber that forms a part of the gas chamber (35).

7. Motor vehicle auxiliary electric motor (10) of one of the preceding claims, wherein the pressure equalization element (42) is formed by a gaspermeable pressure equalization membrane (44).

8. Motor vehicle auxiliary electric motor (10) of one of the preceding claims, wherein the motor stator (12) is fluidically separated from the motor rotor (14) by a can (20).

9. Method for producing a molded body (32) in a motor vehicle auxiliary electric motor (10) of one of the preceding claims, the method comprising the following steps:
filling a liquid molding compound (34) into the electronics chamber through the filling opening (60),
stopping the filling as soon as the control electronics (30) is completely overmoulded and before the molding compound reaches the opening plane (48) of the ventilation shaft (40), and
closing the filling opening (60) with an opening closure (64).

## Revendications

1. Moteur électrique (10) de groupe auxiliaire de véhicule automobile comprenant
un stator de moteur (12) à commutation électronique et une électronique de commande (30) pour commander les bobines de stator (11) formant le stator de moteur (12),
une chambre d'électronique (38) fermée, dans laquelle est disposée l'électronique de commande (30),
un corps de scellement (32) dans la chambre d'électronique (38), l'électronique de commande (30) étant scellée dans le corps de scellement (32),
une chambre de gaz (35) adjacente au corps de scellement (32), et
un élément d'équilibrage de pression (42) pour aérer et purger la chambre de gaz (35),
dans lequel une cheminée d'évent (40) est prévue qui relie fluidiquement la chambre de gaz (35) à l'atmosphère (8), traverse le corps de scellement (32) et à laquelle ledit élément d'équilibrage de pression (42) est associé de manière fluidique.

2. Moteur électrique (10) de groupe auxiliaire de véhicule automobile selon la revendication 1, dans lequel la chambre d'électronique (38) est fermée avec un couvercle du boitier (50) auquel est montée la cheminée d'évent (40).

3. Moteur électrique (10) de groupe auxiliaire de véhicule automobile selon l'une quelconque des revendications précédentes, dans lequel la cheminée d'évent (40) saille à peu près verticalement du plan de base du couvercle du boitier (50) dans la chambre d'électronique (38).

4. Moteur électrique (10) de groupe auxiliaire de véhicule automobile selon l'une quelconque des revendications précédentes, dans lequel le plan de délimitation entre le corps de scellement (32) et la chambre de gaz (35) est situé entre le plan d'ouverture (48) de la cheminée d'évent (40), côté chambre de gaz, et le plan de base du couvercle du boitier (50).

5. Moteur électrique (10) de groupe auxiliaire de véhicule automobile selon l'une quelconque des revendications précédentes, dans lequel un boitier de moteur (21) est prévu qui comprend une ouverture de remplissage (60) séparée, qui est reliée fluidiquement à la chambre d'électronique (38) et est fermée par une fermeture d'ouverture (64).

6. Moteur électrique (10) de groupe auxiliaire de véhicule automobile selon l'une quelconque des revendications précédentes, dans lequel les bobines de stator (11) sont disposées dans une chambre de stator qui forme une partie de la chambre de gaz (35).

7. Moteur électrique (10) de groupe auxiliaire de véhicule automobile selon l'une quelconque des revendications précédentes, dans lequel ledit élément d'équilibrage de pression (42) est formé par une membrane d'équilibrage de pression (44) perméable au gaz.

8. Moteur électrique (10) de groupe auxiliaire de véhicule automobile selon l'une quelconque des revendications précédentes, dans lequel le stator de moteur (12) est séparé fluidiquement du rotor de moteur (14) par une gaine (20).

9. Procédé de fabrication d'un corps de scellement (32) dans un moteur électrique (10) de groupe auxiliaire de véhicule automobile selon l'une quelconque des revendications précédentes, avec les étapes suivantes:
remplir une masse de scellement (34) liquide à travers l'ouverture de remplissage (60) dans la chambre d'électronique,
arrêter le remplissage quand l'électronique de commande (30) est complètement scellée et avant la masse de scellement arrive au plan d'ouverture (48) de la cheminée d'évent (40), et
fermer l'ouverture de remplissage (60) avec une fermeture d'ouverture (64).
